(19) Europäisches Patentamt

European Patent Office

Office européen des brevets

(11) **EP 0 918 003 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(51) Int Cl.:
***B60T 7/12*** *(2006.01)*

(21) Anmeldenummer: **98116346.2**

(22) Anmeldetag: **28.08.1998**

(54) **Verfahren und Vorrichtung zur Ermittlung einer die Schwerpunktshöhe eines Fahrzeuges beschreibenden Grösse**

Procedure and device for determining a parameter related to the height of the centre of gravity of a vehicle

Procédé et dispositif de détermination d'un paramètre lié à la hauteur du centre de gravité d'un véhicule

(84) Benannte Vertragsstaaten:
**DE FR GB**

(30) Priorität: **22.11.1997 DE 19751935**

(43) Veröffentlichungstag der Anmeldung:
**26.05.1999 Patentblatt 1999/21**

(73) Patentinhaber: **ROBERT BOSCH GMBH**
**70442 Stuttgart (DE)**

(72) Erfinder:
• **Leimbach, Klaus-Dieter**
**71696 Moeglingen (DE)**
• **Wetzel,Gabriel**
**70569 Stuttgart (DE)**

(56) Entgegenhaltungen:
**EP-A- 0 807 562      DE-A- 3 222 149**
**DE-A- 4 416 991      US-A- 5 338 106**

• **ZANTEN VAN A ET AL: "FDR - DIE FAHRDYNAMIK-REGELUNG VON BOSCH" ATZ AUTOMOBILTECHNISCHE ZEITSCHRIFT,DE, FRANCKH'SCHE VERLAGSHANDLUNG. STUTTGART, Bd. 96, Nr. 11, 1. November 1994 (1994-11-01), Seiten 674-678,683-689, XP000478694 ISSN: 0001-2785**

EP 0 918 003 B1

**Beschreibung**

Stand der Technik

Die Erfindung betrifft ein Verfahren und eine Vorrichtung zur Ermittlung einer die Schwerpunktshöhe eines Fahrzeuges beschreibenden Größe.

Verfahren und Vorrichtungen zur Ermittlung einer die Schwerpunktshöhe eines Fahrzeuges beschreibenden Größe sind aus dem Stand der Technik in vielerlei Modifikationen bekannt.

Die DE 32 22 149 C2 beschreibt eine Vorrichtung für die vermeidung des Seitwärtskippens eines Fahrzeuges. U.a. enthält die Vorrichtung eine Einrichtung zur Berechnung der Höhe des Gesamtschwerpunktes des Fahrzeuges. Bei diesem Fahrzeug handelt es sich um einen Portalhubwagen für den Transport großvclumiger Container. Bei der Berechnung der Höhe des Gesamtschwerpunktes des Fahrzeuges wird vorausgesetzt, daß das Gewicht des Portalhubwagens sowie die Höhe des Schwerpunktes des Portalhubwagens bekannt sind. Die Höhe des Containers sowie das Gewicht des Containers wird jeweils über eine Meßeinrichtung erfaßt. Ausgehend vom Gewicht des Portalhubwagens, der Höhe des Schwerpunktes des Portalhubwagens, dem Gewicht des Containers sowie der Höhe des Schwerpunktes des Containers wird die Höhe des Schwerpunktes des Fahrzeuges ermittelt.

Die DE 44 16 991 A1 beschreibt ein Verfahren und eine Einrichtung zum Warnen der Fahrer von Lastkraftwagen vor Kippgefahr bei Kurvenfahrten. Hierzu wird vor dem Einfahren des Fahrzeuges in eine Kurve der Fahrzeugtyp und die für Kippgefahr beim Durchfahren dieser Kurve relevanten Zustandsdaten, wie Fahrzeuggewicht und Fahrgeschwindigkeit erfaßt. In Abhängigkeit vom Schwerpunkt der Fahrzeugmasse und vom Kurvenradius wird das Kipprisiko beim Durchfahren der Kurve mit der erfaßten Fahrgeschwindigkeit ermittelt und zumindest ein überhöhte Fahrgeschwindigkeit anzeigendes Signal bei festgestellter Kippgefahr bzw. bei Unterschreiten eines vorbestimmten Sicherheitsabstandes zur Kippgefahr ausgelöst. Das Gesamtgewicht des Fahrzeuges wird dabei wie folgt ermittelt: In einem möglichst geraden Streckenabschnitt vor einer Kurve sind in einer Linie quer zur Fahrtrichtung liegende Radlastsensoren vorgesehen. Durch Summenbildung der in den einzelnen Radlastsensoren ermittelten Radlasten wird das Gesamtgewicht erfaßt. Ferner ist vor der Kurve ein Sensor vorgesehen, mit dem die Höhe bzw. die Höhenkontur des jeweiligen Fahrzeuges erfaßbar ist. Somit ist in Abhängigkeit vom Gesamtgewicht des Fahrzeuges, dessen Höhe bzw. Höhenkontur sowie anhand vorgegebener Daten für den festgestellten Fahrzeugtyp eine gewichtsabhängige Abschätzung der Höhenlage des Fahrzeugschwerpunktes durchführbar.

Die Aufgabe der vorliegenden Erfindung besteht darin, bestehende Verfahren bzw. Vorrichtungen zur Ermittlung einer die Schwerpunktshöhe eines Fahrzeuges beschreibenden Größe zu verbessern.

Die Aufgabe wird durch die Merkmale des Anspruchs 1 und durch die des Anspruchs 9 gelöst.

Vorteile der Erfindung

Vorteilhafterweise wird bei dem erfindungsgemäßen Verfahren zur Ermittlung wenigstens einer die Schwerpunktshöhe des Fahrzeuges beschreibenden Größe für wenigstens ein Rad eine die Raddrehzahl beschreibende erste Größe ermittelt. Für das wenigstens eine Rad wird in Abhängigkeit der die Raddrehzahl des entsprechenden Rades beschreibenden ersten Größe eine den Durchmesser oder den Radius des jeweiligen Rades beschreibende zweite Größe ermittelt. In Abhängigkeit von der für das wenigstens eine Rad ermittelten zweiten Größe, die das Radverhalten dieses Rades beschreibt, wird eine die Schwerpunktshöhe des Fahrzeuges beschreibende Größe ermittelt.

Vorteilhafterweise wird das erfindungsgemäße Verfahren zur Ermittlung wenigstens einer die Schwerpunktshöhe des Fahrzeuges beschreibenden Größe im Rahmen eines Verfahrens zur Stabilisierung des Fahrzeuges eingesetzt. Insbesondere wird das erfindungsgemäße Verfahren im Rahmen eines Verfahrens zur Umkippvermeidung eines Fahrzeuges eingesetzt. Hierbei ist es besonders vorteilhaft, wenn wenigstens in Abhängigkeit wenigstens einer die Schwerpunktshöhe des Fahrzeuges beschreibenden Größe eine Geschwindigkeitsgröße ermittelt wird, und wenn wenigstens in Abhängigkeit dieser Geschwindigkeitsgröße ermittelt wird, ob für das Fahrzeug eine Kipptendenz um eine in Längsrichtung des Fahrzeuges orientierte Fahrzeugachse vorliegt. Liegt eine Kipptendenz des Fahrzeuges vor, so werden zur Stabilisierung des Fahrzeuges, insbesondere zur Vermeidung des Umkippens des Fahrzeuges, vorteilhafterweise wenigstens Bremseneingriffe wenigstens an einem Rad und/oder Motoreingriffe und/oder Eingriffe an Fahrwerksaktuatoren durchgeführt.

Die Formulierung "eine in Längsrichtung des Fahrzeuges orientierte Fahrzeugachse" ist folgendermaßen zu verstehen: Zum einen kann es sich bei der Fahrzeugachse, um die eine Kipptendenz des Fahrzeuges auftritt, um die eigentliche Fahrzeuglängsachse handeln. Zum anderen kann es sich um eine Fahrzeugachse handeln, die um einen gewissen Winkel gegenüber der eigentlichen Fahrzeuglängsachse verdreht ist. Dabei ist es unerheblich, ob die verdrehte Fahrzeugachse durch den Schwerpunkt des Fahrzeuges geht oder nicht. Der Fall der verdrehten Fahrzeugachse soll auch solch eine Orientierung der Fahrzeugachse zulassen, bei der die Fahrzeugachse entweder einer Diagonalachse des Fahrzeuges oder einer zu dieser parallelen Achse entspricht.

Von weiterem Vorteil ist, wenn für wenigstens ein Rad der an diesem Rad vorherrschende Antriebs- und/oder Bremsschlupf ermittelt und dessen Betrag mit einem entsprechenden Schwellenwert verglichen wird, und wenn die Ermittlung der die Schwerpunktshöhe des Fahrzeuges beschreibenden Größe in Abhängigkeit dieses Vergleiches durchgeführt wird. Basierend auf diesem Vergleich können unterschiedliche Ermittlungen der wenigstens einen die Schwerpunktshöhe des Fahrzeuges beschreibenden Größe durchgeführt werden. So wird, wenn für das wenigstens eine Rad der Betrag des an diesem Rad vorherrschenden Antriebs- und/oder Bremsschlupfes kleiner als der entsprechende Schwellenwert ist, die Ermittlung der entsprechenden die Schwerpunktshöhe des Fahrzeuges beschreibenden Größe wenigstens in Abhängigkeit von der für das wenigstens eine Rad im aktuellen Zeitschritt ermittelten Größe, die das Radverhalten beschreibt, durchgeführt. Wenn dagegen der Betrag des für das wenigstens eine Rad ermittelten Antriebs- und/oder Bremsschlupfes größer als der entsprechende Schwellenwert ist, so wird die Ermittlung der entsprechenden die Schwerpunktshöhe des Fahrzeuges beschreibenden Größe wenigstens in Abhängigkeit von der für das wenigstens eine Rad in einem vorigen Zeitschritt ermittelten Größe, die das Radverhalten beschreibt, durchgeführt.

Als die Größe, die das Radverhalten des jeweiligen Rades beschreibt, wird vorteilhafterweise eine von der auf das jeweilige Rad wirkenden Radlast abhängige Größe ermittelt. Hierbei sind Größen besonders vorteilhaft, die den Durchmesser oder den Radius des jeweiligen Rades beschreiben, da sich eine kurvenbedingte Verlagerung des Fahrzeugschwerpunktes beispielsweise deutlich auf den Durchmesser der Fahrzeugräder auswirkt, und somit eine Verlagerung des Fahrzeugschwerpunktes und eine daraus folgende Kipptendenz des Fahrzeuges unmittelbar anhand des Durchmessers der Fahrzeugräder ermittelbar ist.

Vorteilhafterweise wird die das Radverhalten des Rades beschreibende Größe wenigstens in Abhängigkeit der die Raddrehzahl des entsprechenden Rades beschreibenden Größe, einer die Fahrzeuggeschwindigkeit beschreibenden Größe, einer die Querdynamik des Fahrzeuges repräsentierenden Größe und einer Geometrie des Fahrzeuges beschreibenden Größe ermittelt. Die die Fahrzeuggeschwindigkeit beschreibende Größe wird wenigstens in Abhängigkeit von den für die Räder ermittelten Größen, die die Raddrehzahlen beschreiben, ermittelt. Als eine die Querdynamik des Fahrzeuges repräsentierende Größe wird vorteilhafterweise eine die Gierrate des Fahrzeuges und/oder eine die Querbeschleunigung des Fahrzeuges beschreibende Größe ermittelt.

Die entsprechende die Schwerpunktshöhe des Fahrzeuges beschreibende Größe wird vorteilhafterweise wenigstens in Abhängigkeit einer das Verhalten einer Radachse beschreibenden Größe, die insbesondere einer den Neigungswinkel der Radachse gegenüber der Fahrbahn beschreibenden Größe entspricht, ermittelt. Wenigstens in Abhängigkeit der für die Räder einer Radachse ermittelten Größen, die jeweils das Radverhalten beschreiben, und unter Berücksichtigung einer die Fahrzeuggeometrie repräsentierenden Größe, wird die das Verhalten der Radachse beschreibende Größe ermittelt.

Vorteilhafterweise werden bei der Ermittlung der entsprechenden die Schwerpunktshöhe des Fahrzeuges beschreibenden Größe, neben der das Verhalten der Radachse beschreibenden Größe, zusätzlich eine die Querdynamik des Fahrzeuges beschreibende Größe, eine Größe, die die auf die Radachse wirkende Last beschreibt, eine die Fahrzeuggeometrie beschreibende Größe und eine die Steifigkeit, insbesondere die resultierende vertikale Steifigkeit, der der Radachse zugeordneten Räder repräsentierenden Größe, berücksichtigt.

Weitere Vorteile sowie vorteilhafte Ausgestaltungen können den Unteransprüchen, der Zeichnung sowie der Beschreibung des Ausführungsbeispieles entnommen werden.

Zeichnung

Die Zeichnung besteht aus den Figuren 1 bis 4. Die Figuren 1a und 1b zeigen verschiedene Straßenfahrzeuge, bei denen das erfindungsgemäße Verfahren eingesetzt wird. Die Figur 2 zeigt in einer Übersichtsanordnung die erfindungsgemäße Vorrichtung zur Durchführung des erfindungsgemäßen Verfahrens. In Figur 3 sind mit Hilfe eines Ablaufdiagrammes die zur Durchführung des erfindungsgemäßen Verfahrens wesentlichen Schritte dargestellt. Figur 4 stellt in einer schematischen Darstellung den physikalischen Sachverhalt für ein Straßenfahrzeug bei Kurvenfahrt dar.

Es sei darauf hingewiesen, daß Blöcke mit derselben Bezeichnung in unterschiedlichen Figuren die selbe Funktion haben.

Ausführungsbeispiel

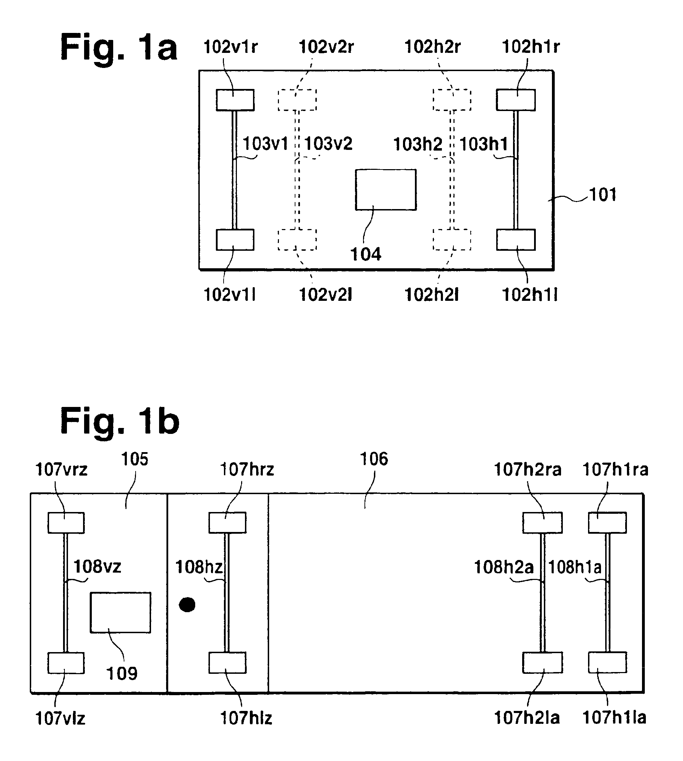

Zunächst soll auf die Figuren 1a und 1b eingegangen werden, die verschiedene Straßenfahrzeuge darstellen, bei denen das erfindungsgemäße Verfahren zum Einsatz kommen kann.

In Figur 1a ist ein einteiliges Fahrzeug 101 dargestellt. Bei diesem Fahrzeug kann es sich sowohl um einen Personenkraftwagen als auch um einen Nutzkraftwagen handeln. Bei dem in Figur 1a dargestellten einteiligen Fahrzeug 101 soll es sich um ein Fahrzeug mit wenigstens zwei Radachsen handeln, was durch die teilweise gestrichelte Darstellung angedeutet ist. Die Radachsen des Fahrzeuges 101 sind mit 103ix bezeichnet. Dabei gibt der Index i an, ob es sich um eine Vorderachse (v) oder um eine Hinterachse (h) handelt. Durch den Index x wird bei Fahrzeugen mit mehr als zwei Achsen angegeben, um welche der Vorder- bzw. Hinterachsen es sich handelt. Dabei gilt folgende Zuordnung: Der Vorderachse bzw. der Hinterachse, die der Fahrzeugberandung am nächsten ist, ist jeweils der Index x mit dem kleinsten Wert zugeordnet. Je weiter die jeweilige Radachse von der Fahrzeugberandung entfernt ist, desto größer ist der Wert des zugehörigen Index x. Den Radachsen 103ix sind die Räder 102ixj zugeordnet. Die Bedeutung der Indizes i bzw. x entspricht der vorstehend beschriebenen. Mit dem Index j wird angezeigt, ob sich das Rad auf der rechten (r) bzw. auf der linken (l) Fahrzeugseite befindet. Bei der Darstellung der Räder 102ixj wurde auf die Unterscheidung zwischen Einzelrädern bzw. Zwillingsrädern verzichtet. Ferner enthält das Fahrzeug 101 ein Steuergerät 104, in welchem die erfindungsgemäße Vorrichtung zur Durchführung des erfindungsgemäßen Verfahrens implementiert ist.

Zur Verdeutlichung der in Figur 1a gewählten Darstellung sei beispielhaft ausgeführt: Ein zweiachsiges Fahrzeug enthält eine Vorderachse 103v1 mit den ihr zugeordneten Rädern 102v1r bzw. 102v1l sowie eine Hinterachse 103hl mit den ihr zugeordneten Rädern 102h1r bzw. 102h1l. Ein dreiachsiges Fahrzeug weist im Normalfall eine Vorderachse 103v1 mit den Rädern 102v1r bzw. 102v1l, sowie eine erste Hinterachse 103h1 mit den Rädern 102h1r bzw. 102h1l sowie eine zweite Hinterachse 103h2 mit den Rädern 102h2r bzw. 102h2l auf.

In Figur 1b ist eine Fahrzeugkombination, bestehend aus einer Zugmaschine 105 und einem Auflieger 106 dargestellt. Die gewählte Darstellung soll keine Einschränkung darstellen, denkbar ist auch eine Fahrzeugkombination, die aus einer Zugmaschine und einem Deichselanhänger besteht. Die Zugmaschine 105 soll die Radachsen 108iz aufweisen. Den Radachsen 108iz sind die entsprechenden Räder 107ijz zugeordnet. Die Bedeutung der Indizes i bzw. j entspricht der bereits im Zusammenhang mit Figur 1a beschriebenen. Der Index z gibt an, daß es sich um Radachsen bzw. Räder der Zugmaschine handelt. Ferner weist die Zugmaschine 105 ein Steuergerät 109 auf, mit dem eine die Schwerpunktshöhe der Zugmaschine 105 beschreibende Größe und/oder eine die Schwerpunktshöhe des Aufliegers 106 beschreibende Größe ermittelt wird. Der Auflieger 106 soll zwei Radachsen 108ixa enthalten. Den beiden Radachsen 108ixa sind in entsprechender Weise die Räder 107ixja zugewiesen. Die Bedeutung der Indizes i bzw. x bzw. j entspricht der bereits im Zusammenhang mit Figur la dargestellten. Der Index a gibt an, daß es sich um Komponenten des Aufliegers 106 handelt. Die in Figur 1b dargestellte Anzahl von Radachsen für die Zugmaschine 105 bzw. für den Auflieger 106 soll keine Einschränkung darstellen. Das Steuergerät 109 kann anstelle in der Zugmaschine 105 auch im Auflieger 106 angeordnet sein.

Die in den Figuren 1a und 1b gewählte Kennzeichnung durch die Indizes a, i, j, x sowie z ist für sämtliche Größen bzw. Komponenten, bei denen sie Verwendung findet, entsprechend.

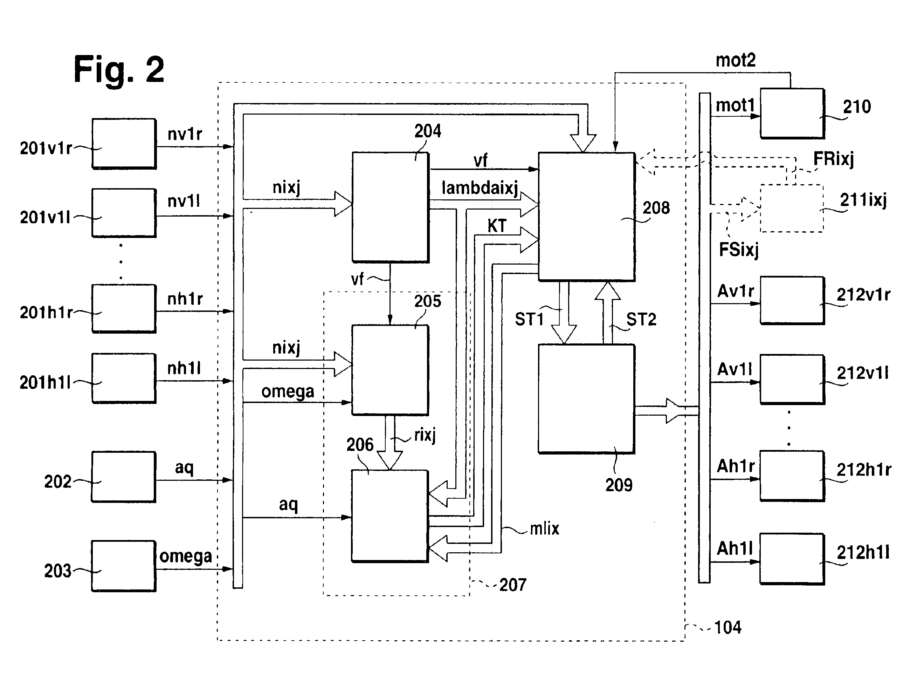

Im folgenden soll anhand von Figur 2 die erfindungsgemäße Vorrichtung zur Durchführung des erfindungsgemäßen Verfahrens besprochen werden.

An dieser Stelle sei bemerkt, daß die Besprechung der erfindungsgemäßen Vorrichtung anhand eines einteiligen Fahrzeuges keine Einschränkung darstellen soll. Das erfindungsgemäße Verfahren bzw. die erfindungsgemäße Vorrichtung kann in entsprechender Weise auch für eine Fahrzeugkombination, wie sie in Figur 1b dargestellt ist, eingesetzt werden.

Bei dem Fahrzeug, welches dem Ausführungsbeispiel zugrundeliegt, handelt es sich um ein einteiliges Fahrzeug, wie es in Figur 1a dargestellt ist. Ferner sei angenommen, daß dieses einteilige Fahrzeug wenigstens zwei Radachsen 103ix aufweist. Bei diesen beiden Radachsen soll es sich um die Vorderachse 103vl mit den Rädern 102v1r bzw. 102v1l sowie um die Hinterachse 103hl mit den Rädern 102h1r bzw. 102h1l handeln. Die zu diesen Rädern gehörenden Raddrehzahlsensoren 201v1r, 201v1l, 201h1r bzw. 201h1l sind in Figur 2 dargestellt. Je nach Anzahl der Radachsen des einteiligen Fahrzeuges können, wie in Figur 2 angedeutet, weitere Raddrehzahlsensoren 201ixj berücksichtigt werden. Mit den Raddrehzahlsensoren 201ixj werden die Größen nixj ermittelt, die jeweils die Raddrehzahl des entsprechenden Rades 102ixj beschreiben. Die Größen nixj werden Blöcken 204, 205 sowie 208 zugeführt.

Ferner sei angenommen, daß das Fahrzeug 101 einen Querbeschleunigungssensor 202 sowie einen Gierratensensor 203 enthält. An dieser Stelle sei bemerkt, daß die Verwendung des Querbeschleunigungssensors 202 bzw. die des Gierratensensors 203 keine Einschränkung darstellen soll. Beispielsweise kann anstelle der Ermittlung einer die Querbeschleunigung beschreibenden Größe aq mit Hilfe eines Querbeschleunigungssensors, diese Größe auch ausgehend von den Größen nixj ermittelt werden. Entsprechendes gilt für die die Gierrate des Fahrzeuges beschreibende Größe omega.

Die die Querbeschleunigung des Fahrzeugs beschreibende Größe aq, die mit Hilfe des Querbeschleunigungssensors 202 ermittelt wird, wird sowohl dem Block 208 als auch einem Block 206 zugeführt. Die die Gierrate des Fahrzeuges beschreibende Größe omega, die mit Hilfe des Gierratensensors 203 ermittelt wird, wird den Blöcken 205 und 208 zugeführt.

Im Block 204 wird in bekannter weise aus den Größen nixj eine die Fahrzeuggeschwindigkeit beschreibende Größe vf ermittelt. Diese Größe vf wird ausgehend vom Block 204 den Blökken 205 bzw. 208 zugeführt. Ferner werden im Block 204 ausgehend von den Größen nixj, sowie der Größe vf, in bekannter Weise Größen lambdaixj ermittelt, die den Antriebs- und/oder Bremsschlupf der Räder beschreiben. Diese Größen lambdaixj werden sowohl dem Block 206 als auch dem Block 208 zugeführt.

Im Block 205 wird ausgehend von der Größe vf, den Größen nixj sowie der Größe omega die Größen rixj ermittelt, die das Radverhalten der Räder beschreiben. Diese Größen rixj sind von der auf das jeweilige Rad wirkenden Radlast abhängig. Insbesondere handelt es sich bei den Größen rixj um die dynamischen Rollradien der Räder, die mit Hilfe der Gleichung

$$rixj = \frac{vf \pm a \cdot omega}{nixj}$$

ermittelt werden, wobei die in der Gleichung enthaltene Größe a die halbe Spurweite des Fahrzeuges beschreibt. Für die kurvenäußeren Räder wird das Pluszeichen verwendet, für die kurveninneren Räder das Minuszeichen.

An dieser Stelle sei bemerkt, daß die in obiger Gleichung verwendete Größe omega, die die Gierrate des Fahrzeuges beschreibt, auch durch einen aus der Querbeschleunigung des Fahrzeuges und der Fahrzeuggeschwindigkeit hergeleiteten Ausdruck ersetzt werden kann. In diesem Fall müßte dem Block 205 anstelle der Größe omega die Größe aq zugeführt werden.

Die das Radverhalten beschreibenden Größen rixj, die den dynamischen Rollradien der Räder entsprechen, werden ausgehend vom Block 205 dem Block 206 zugeführt. Da es sich bei den das Radverhalten beschreibenden Größen rixj um die dynamischen Rollradien handelt, beschreiben diese Größen den Durchmesser bzw. entsprechend den Radius den jeweiligen Rades.

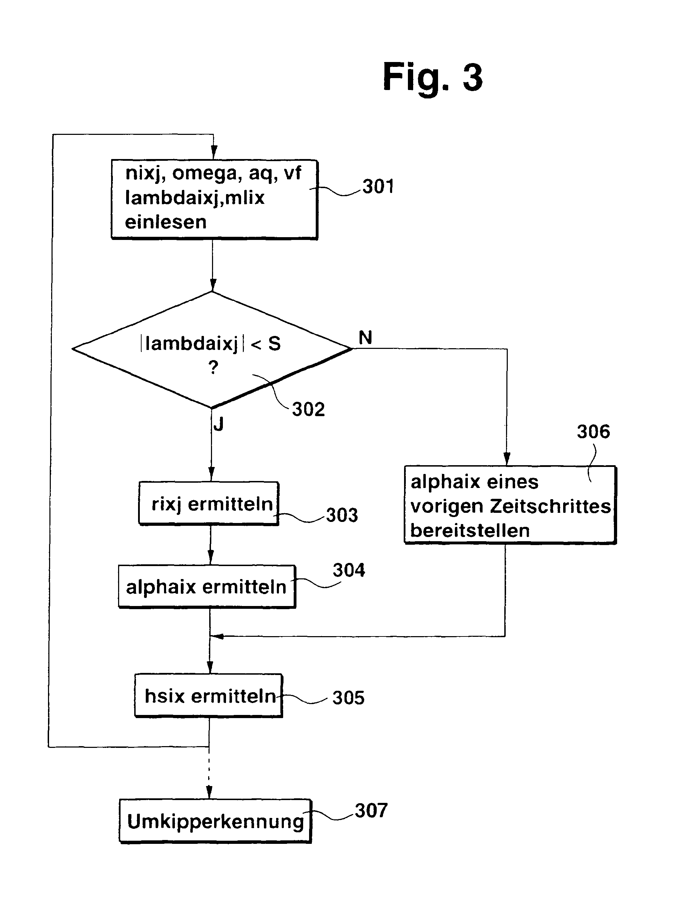

Im Block 206 wird ausgehend von den ihm zugeführten Größen lambdaixj, rixj, aq, sowie den Größen mlix, die jeweils die achsbezogene Last beschreiben, wenigstens eine die Schwerpunktshöhe des Fahrzeuges beschreibende Größe ermittelt. Auf die konkrete Ermittlung der wenigstens einen die Schwerpunktshöhe des Fahrzeuges beschreibende Größe wird im Zusammenhang mit der noch zu beschreibenden Figur 3 eingegangen.

Die wenigstens eine die Schwerpunktshöhe des Fahrzeuges beschreibende Größe kann im Rahmen einer Erkennung einer Kipptendenz eines Fahrzeuges um eine in Längsrichtung des Fahrzeuges orientierte Fahrzeugachse eingesetzt werden. Hierzu werden im Block 206 verschiedene Abfragen durchgeführt. Wird im Block 206 erkannt, daß für das Fahrzeug eine Kipptendenz um eine in Längsrichtung des Fahrzeuges orientierte Fahrzeugachse vorliegt, so wird eine Größe KT erzeugt, die dem Block 208 zugeführt wird. Durch diese Größe KT wird dem Regler bzw. Fahrzeugregler 208 mitgeteilt, ob eine Kipptendenz des Fahrzeuges vorliegt oder nicht. In Figur 2 sind die beiden im Steuergerät enthaltenen erfindungswesentlichen Komponenten 205 bzw. 206 zu einem Block 207 zusammengefaßt.

Mit 208 ist der im Steuergerät 104 implementierte Regler bzw. Fahrzeugregler 208 bezeichnet. Bei dem Regler 208 handelt es sich beispielsweise um einen Regler, der in seiner Grundfunktion eine die Fahrdynamik des Fahrzeuges beschreibende Größe, beispielsweise eine von der Querbeschleunigung und/oder der Gierrate des Fahrzeuges abhängige Größe, durch Eingriffe in die Radbremsen und/oder in den Motor regelt. Solch ein Regler ist beispielsweise aus der in der Automobiltechnischen Zeitschrift (ATZ) 16, 1994, Heft 11, auf den Seiten 674 bis 689 erschienen Veröffentlichung "FDR - die Fahrdynamikregelung von Bosch" bekannt. Die im Block 208 in ihrer Grundfunktion stattfindende Regelung basiert in bekannter Weise auf den dem Block 208 zugeführten Größen nixj, aq, omega, vf, lambdaixj, einer Größe mot2, die beispielsweise die Motordrehzahl des Motors 210 beschreibt und die ausgehend von dem Motor 210 dem Block 208 zugeführt wird, sowie Größen ST2, die ausgehend von einem Block 209, welche die Ansteuerlogik für die im Fahrzeug enthaltenen Aktuatoren darstellt, dem Block 208 zugeführt werden.

Zusätzlich zu der im Block 208 in der Grundfunktion implementierten Regelung ist im Regler 208 eine Umkippvermeidung implementiert. Die Umkippvermeidung wird im wesentlichen ausgehend von den Größen KT, die im Block 206 im Rahmen der Umkipperkennung erzeugt werden, ausgeführt. Mit der. Größen KT kann dem Regler 208 zum einen mitgeteilt werden, daß eine Kipptendenz des Fahrzeuges um eine in Längsrichtung des Fahrzeuges orientierte Fahrzeugachse vorliegt, außerdem kann dem Regler 208 mitgeteilt werden, wie stark diese Kipptendenz ist. Außerdem können die Größen KT Informationen darüber enthalten, wie bzw. über welche Räder das Fahrzeug zu kippen droht.

Für die Ermittlung der wenigstens einen die Schwerpunktshöhe des Fahrzeuges beschreibenden Größe sind im Block 206 die achsbezogenen Radlasten mlix erforderlich. Diese werden im Regler 208 beispielsweise in bekannter Weise aus den Raddrehzahlen ermittelt, und ausgehend vom Block 208 dem Block 206 zugeführt.

Der Regler 208 erzeugt Größen ST1, die der Ansteuerlogik 209, mit der die dem Fahrzeug zugeordneten Aktuatoren angesteuert werden, zugeführt werden. Mit den Größen ST1 wird der Ansteuerlogik 209 mitgeteilt, welche Aktuatoren wie angesteuert werden sollen.

Um ein Umkippen des Fahrzeuges um eine in Längsrichtung des Fahrzeuges orientierte Fahrzeugachse zu vermeiden, sind beispielsweise folgende Eingriffe in die Aktuatoren des Fahrzeuges denkbar: Zum einen kann durch Bremsen bzw. durch Zurücknahme des Motormomentes eine Verminderung der Fahrzeuggeschwindigkeit erreicht werden. Zum anderen kann durch radindividuelle Bremseingriffe gezielt dem Umkippen des Fahrzeuges entgegengewirkt werden. Zudem kann durch Eingriffe in die dem Fahrzeug zugeordneten Fahrwerksaktuatoren eine wankbewegung des Fahrzeuges begrenzt werden.

Im Block 209, der Ansteuerlogik, werden die vom Regler 208 erzeugten Größen ST1 in Ansteuersignale für den Motor 210 sowie in Ansteuersignale für die Aktuatoren des Fahrzeuges umgesetzt. Zur Ansteuerung des Motors 210 erzeugt die Ansteuerlogik ein Signal mot1, mit dem beispielsweise die Drosselklappenstellung des Motors beeinflußbar ist. Zur Ansteuerung der Fahrwerksaktuatoren 211ixj erzeugt die Ansteuerlogik 209 Signale Fsixj, mit denen die von den Fahrwerksaktuatoren 211ixj realisierte Dämpfung bzw. Steifigkeit beeinflußbar ist. Zur Ansteuerung der Aktuatoren 212ixj, die insbesondere als Bremsen ausgebildet sind, erzeugt die Ansteuerlogik 209 Signale Aixj, mit denen die von den Aktuatoren 212ixj an den entsprechenden Rädern erzeugten Bremskräfte beeinflußbar sind. Die Ansteuerlogik 209 erzeugt Größen ST2, die dem Regler 208 zugeführt werden, und die eine Information über die Ansteuerung der einzelnen Aktuatoren enthalten.

Mit den Fahrwerksaktuatoren 211ixj wird das Fahrwerk des Fahrzeuges beeinflußt. Damit der Regler den Istzustand der Fahrwerksaktuatoren 211ixj kennt, werden ausgehend von den Fazrwerksaktuatoren 211ixj dem Regler 208 Signale Frixj zugeführt.

An dieser Stelle sei bemerkt, daß neben den in Figur 2 dargestellten Aktuatoren auch der Einsatz von sogenannten Retardern denkbar ist.

Bei der in Figur 2 zum Einsatz kommenden Bremsanlage kann es sich um eine hydraulische oder pneumatische oder elektrohydraulische oder elektropneumatische Bremsanlage handeln.

Mit Hilfe des in Figur 3 dargestellten Ablaufdiagrammes soll der Ablauf des erfindungsgemäßen Verfahrens dargestellt werden. Das in Figur 3 dargestellte Ablaufdiagramm beschreibt den Ablauf des erfindungsgemäßen Verfahrens, wie es für ein in Figur 1a dargestelltes einteiliges Fahrzeug abläuft, dem die erfindungsgemäße Vorrichtung nach Figur 2 zugrundeliegt.

Das erfindungsgemäße Verfahren läuft dabei im wesentlichen in den Blöcken 205 und 206 ab.

Das erfindurigsgemäße Verfahren beginnt mit einem Schritt 301, in welchem die Größen nixj, omega, aq, vf, lambdaixj sowie mlix eingelesen werden. Im Anschluß an den Schritt 301 wird ein Schritt 302 ausgeführt.

Im Schritt 302 wird der Betrag der den Antriebs- und/oder Bremsschlupf beschreibenden Größe lambdaixj mit einem Schwellenwert S verglichen. Die im Schritt 302 stattfindende Abfrage wird aus folgendem Grund durchgeführt: Die im Schritt 303 stattfindende Ermittlung der das Radverhalten beschreibenden Größen rixj, die die dynamischen Rollradien der Räder darstellen, kann nur durchgeführt werden, wenn die Räder quasi schlupffrei sind, d.h., wenn der Antriebs- und/oder Bremsschlupf der Räder kleiner als ein vorgegebener Schwellenwert ist. Ist dies nicht erfüllt, so können die das Radverhalten beschreibenden Größen rixj nicht fehlerfrei ermittelt werden. Würde an den Rädern ein zu großer Antriebs- und/oder Bremsschlupf vorliegen, so würde dies zu Fehlern bei der Ermittlung der das Radverhalten beschreibenden Größen rixj führen, was wiederum zu Fehlern bei der Ermittlung der die Schwerpunktshöhe des Fahrzeuges beschreibenden Größe führen würde.

Wird im Schritt 302 festgestellt, daß der Betrag der Größe lambdaixj kleiner als der entsprechende Schwellenwert ist, so wird im Anschluß an den Schritt 302 ein Schritt 303 ausgeführt. Wird dagegen im Schritt 302 festgestellt, daß der Betrag der Größe lambdaixj größer als der entsprechende Schwellenwert S ist, so wird im Anschluß an den Schritt 302 ein Schritt 306 ausgeführt.

An dieser Stelle sei bemerkt, daß die im Schritt 302 verwendete indizierte Darstellung bedeuten soll, daß die Abfrage für ein beliebiges einzelnes Rad oder für eine beliebige Anzahl von Rädern oder für alle Räder des Fahrzeuges ausgeführt werden soll.

Im Schritt 303 werden die das jeweilige Radverhalten beschreibenden Größen rixj gemäß der Beziehung

$$rixj = \frac{vf \pm a \cdot omega}{nixj}$$

ermittelt. In die Ermittlung der Größen rixj, die den jeweiligen dynamischen Rollradius darstellen, geht die Fahrzeuggeschwindigkeit vf, die Gierrate omega des Fahrzeuges, die entsprechende Raddrehzahl nixj sowie die halbe Spurweite des Fahrzeuges ein.

Die Größen rixj können nur ermittelt werden, wenn kein allzu großer Radschlupf vorliegt, d.h., sie können nur ermittelt werden, wenn die Radgeschwindigkeiten und die Fahrzeuggeschwindigkeit nicht allzusehr voneinander abweichen. Weichen die Radgeschwindigkeiten und die Fahrzeuggeschwindigkeit zu sehr voneinander ab, wie es beispielsweise der Fall ist, wenn einzelne Räder starken Schlupf aufweisen, so kann es aufgrund der in diesem Fahrzeugzustand ermittelten Größen rixj, im Schritt 305 zu Fehlern in der Ermittlung der die Schwerpunktshöhe des Fahrzeuges beschreibenden Größe kommen.

Im Anschluß an den Schritt 303 wird ein Schritt 304 ausgeführt. In diesem Schritt werden die das Verhalten der jeweiligen Radachse beschreibenden Größen alphaix gemäß der Beziehung

$$alpahix = \left| \frac{rixl - rixr}{2 \cdot a} \right|$$

ermittelt. Gemäß dieser Beziehung gehen in die Ermittlung der Größe alphaix, die das Verhalten einer Radachse, insbesondere den Neigungswinkel der Radachse gegenüber der Fahrbahn beschreibt, die für die Räder dieser Radachse ermittelten Größen, die jeweils das Radverhalten beschreiben, sowie die Spurweite 2a des Fahrzeuges ein. Obige Gleichung für den Neigungswinkel alphaix stellt eine Näherung dar, die für kleine Winkel alphaix gilt. Im Anschluß an den Schritt 304 wird ein Schritt 305 ausgeführt.

Im Schritt 305 wird wenigstens eine die Schwerpunktshöhe des Fahrzeuges beschreibende Größe hsix gemäß der Beziehung

$$hsix = \frac{C \cdot a^2}{mlix \cdot aq} \cdot alphaix$$

ermittelt. In dieser Gleichung repräsentiert C die resultierende vertikale Steifigkeit der der Radachse zugeordneten Räder. Die Größe a entspricht der halben Spurweite der Radachse, die Größe alphaix entspricht dem Neigungswinkel der Radachse gegenüber der Fahrbahn. Die Größe mlix entspricht der auf die Radachse wirkenden Last. Die Größe aq entspricht der auf das Fahrzeug wirkenden Querbeschleunigung.

Die Größe hsix entspricht der auf die Achse 103ix bezogenen Schwerpunktshöhe. Es können mehrere solcher Schwerpunktshöhen ermittelt werden. Theoretisch kann mit dem erfindungsgemäßen Verfahren für jede Radachse eine entsprechende Schwerpunktshöhe hsix ermittelt werden. Diese Schwerpunktshöhen können im Rahmen einer Umkipperkennung bzw. Umkippvermeidung einzeln verarbeitet werden, oder es kann aus diesen Schwerpunktshöhen eine Größe gebildet werden, die entsprechend weiter verarbeitet wird.

Im Anschluß an den Schritt 305 wird erneut der Schritt 301 ausgeführt. Wie in Figur 3 durch den strichlinierten Pfeil angedeutet ist, kann die im Schritt 305 ermittelte Größe hsix, in einer im Schritt 307 stattfindenden Umkipperkennung eingesetzt werden.

Ausgehend von der wenigstens einen, die Schwerpunktshöhe des Fahrzeuges beschreibenden Größe hsix, kann im Schritt 307 eine Erkennung, ob eine Kipptendenz des Fahrzeuges um eine in Längsrichtung des Fahrzeuges orientierte Fahrzeugachse vorliegt, wie folgt durchgeführt werden:

Ausgehend von wenigstens einer die Schwerpunktshöhe des Fahrzeuges beschreibenden Größen hsix, die insbesondere eine achsbezogene Schwerpunktshöhe darstellt, wird ein Geschwindigkeitsgrenzwert für die Kurvenfahrt des Fahrzeuges ermittelt. Der Geschwindigkeitsgrenzwert gibt die Geschwindigkeit für das Fahrzeug an, bei dem ein Kippen des Fahrzeuges um eine in Längsrichtung des Fahrzeuges orientierte Fahrzeugachse nicht zu erwarten ist. Zur Ermittlung des Geschwindigkeitsgrenzwertes in Abhängigkeit der die Schwerpunktshöhe des Fahrzeuges beschreibenden Größe sei beispielsweise auf die im "Kraftfahrtechnischen Taschenbuch", VDI-Verlag, 21. Auflage, auf Seite 346 stehende Formel verwiesen. Es wird festgestellt, ob der Betrag der Differenz, die aus der Fahrzeuggeschwindigkeit und dem Geschwindigkeitsgrenzwert gebildet wird, kleiner gleich einem entsprechenden Schwellenwert ist. Ist der Betrag der Differenz kleiner gleich dem Schwellenwert, so liegt eine Kipptendenz des Fahrzeuges um eine in Längsrichtung des Fahrzeuges orientierte Fahrzeugachse vor. Folglich werden geeignete Stabilisierungseingriffe durchgeführt.

Wird im Schritt 302 festgestellt, daß der Betrag der Größe lambdaixj größer als der entsprechende Schwellenwert S ist, so wird im Anschluß an den Schritt 302 ein Schritt 306 ausgeführt. Im Schritt 306 wird die das Verhalten der entsprechenden Radachse beschreibende Größe alphaix eines vorigen Zeitschrittes bereitgestellt. Die Größe alphaix eines vorigen Zeitschrittes kann auf verschiedene Art und Weise bereitgestellt werden: Hierzu wird beispielsweise die Größe alphaix, die für einen vorigen Zeitschritt, bei dem die im Schritt 302 stattfindende Abfrage erfüllt war, zwischengespeichert. Somit kann in dem Zeitschritt, in welchem der Schritt 306 ausgeführt wird, der Wert der Größe alphaix des vorigen Zeitschrittes aus dem Speicher ausgelesen und bereitgestellt werden. Zum anderen können die im Schritt 303 ermittelten Werte für die Größen rixj in einem Speicher abgelegt werden. In diesem Fall kann im Schritt 306 die Größe alphaix in Abhängigkeit der Größen rixj des vorigen Zeitschrittes ermittelt werden.

Im Anschluß an den Schritt 306 wird der Schritt 305 ausgeführt.

An dieser Stelle soll nochmals auf die im Schritt 302 stattfindende Abfrage eingegangen werden. Wie bereits vorstehend erwähnt, ist die Abfrage deshalb erforderlich, weil bei zu großem Schlupf die Ermittlung der Größen rixj verfälscht werden würde. Die Größe rixj kann nur ermittelt werden, wenn der Betrag der Größe lambdaixj kleiner als der entsprechende Schwellenwert S ist. In diesem Fall wird im Schritt 305 die Größe hsix in Abhängigkeit der im aktuellen Zeitschritt ermittelten Größen rixj ermittelt. Für den Fall, daß der Betrag der Größe lambdaixj größer als der entsprechende Schwellenwert S ist, wird, wie bereits oben beschrieben, im Schritt 306 die Größe alphaix eines vorigen Zeitschrittes bereitgestellt. In diesem Fall gehen in die Ermittlung der Größe hsix, aufgrund der Berücksichtigung der Größe alphaix eines vorigen Zeitschrittes, die in einem vorigen Zeitschritt ermittelten Größen, die das Radverhalten beschreiben, ein.

Dadurch daß in der Figur 3 lediglich auf ein einteiliges Fahrzeug eingegangen wird, soll keine Einschränkung der erfindungswesentlichen Idee entstehen. Das in Figur 3 dargestellte Ablaufdiagramm ist in entsprechender Weise auch für eine Fahrzeugkombination anwendbar.

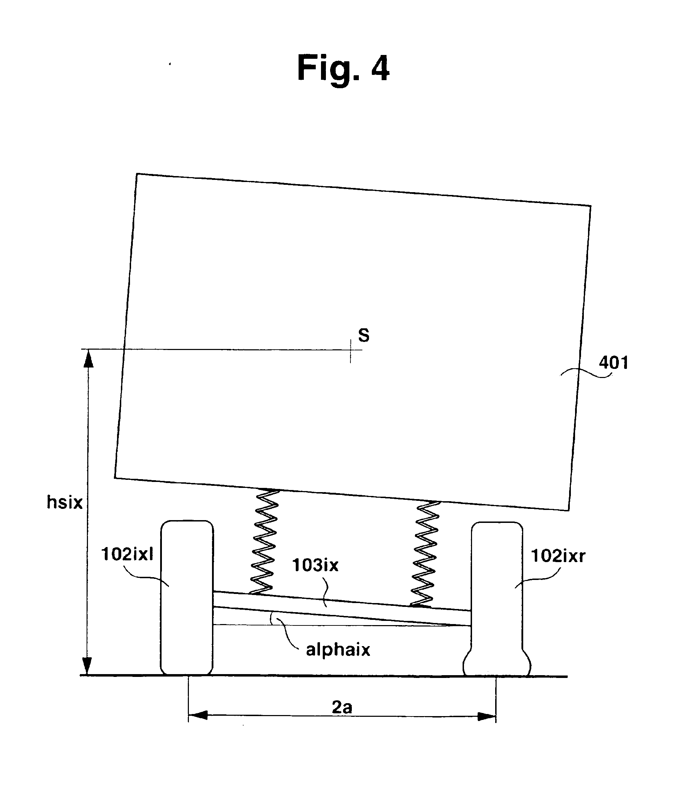

Mit Hilfe von Figur 4 soll abschließend der dem erfindungsgemäßen Verfahren zugrundeliegende physikalische Sachverhalt dargestellt werden. In Figur 4 ist ein einteiliges Fahrzeug, wie es in Figur 1a dargestellt ist, schematisch dargestellt. Dies soll jedoch keine Einschränkung darstellen.

In Figur 4 ist eine Radachse 103ix mit den zugehörigen Rädern 102ixl bzw. 102ixr dargestellt. Ferner ist der mittels Aufhängungsvorrichtungen 405 bzw. 406 mit der Radachse 103ix verbundene Fahrzeugaufbau 401 dargestellt. In Figur 4 ist die Spurweite 2a des Fahrzeuges eingezeichnet. Ferner ist der achsbezogene Schwerpunkt S und die zugehörige achsbezogene Schwerpunktshöhe hsix eingezeichnet. Ebenso ist der Neigungswinkel alphaix der Radachse gegenüber dem Fahrbahnuntergrund eingezeichnet. Für das Fahrzeug liegt eine Kurvenfahrt nach links vor.

Wie Figur 4 zeigt, entstehen bei einer Kurvenfahrt Lastverlagerungen, das kurveninnere Rad 102ixl wird entlastet und kann in Extremsituationen den Bodenkontakt verlieren. Dabei ist es unerheblich, ob die Kurvenfahrt auf einer ebenen oder auf einer geneigten Fahrbahn stattfindet. Das kurvenäußere Rad 102ixr wird stärker belastet. Durch diese Lastverlagerung an den einzelnen Rädern ändert sich der jeweilige dynamische Rollradius rixj. Diese Änderungen führen zu einer Neigung der Radachse gegenüber dem Fahrbahnuntergrund bzw. zu einer entsprechenden Verlagerung des Schwerpunktes. Ferner lassen sich diese Änderungen zur Erkennung einer Kipptendenz eines Fahrzeuges um eine in Längsrichtung des Fahrzeuges orientierte Fahrzeugachse verwenden.

## Patentansprüche

1. Verfahren zur Ermittlung wenigstens einer die Schwerpunktshöhe (hsix) eines Fahrzeuges beschreibenden Größe, bei dem für wenigstens ein Rad eine die Raddrehzahl beschreibende erste Größe (nixj) ermittelt wird (301), bei dem für wenigstens ein Rad in Abhängigkeit der ersten Größe eine den Durchmesser oder den Radius des jeweiligen Rades beschreibende zweite Größe (rixj) ermittelt wird (303),

   bei dem in Abhängigkeit von der zweiten Größe (rixj) eine die Schwerpunktshöhe (hsix) des Fahrzeuges beschreibende Größe ermittelt wird (305).

2. Verfahren nach Anspruch 1, **dadurch gekennzeichnet, daß** das Verfahren zur Ermittlung wenigstens einer die Schwerpunktshöhe eines Fahrzeuges beschreibenden Größe (hsix), im Rahmen eines Verfahrens zur Stabilisierung des Fahrzeuges, insbesondere im Rahmen eines Verfahrens zur Umkippvermeidung des Fahrzeuges, eingesetzt wird, wobei insbesondere vorgesehen ist,

   daß wenigstens in Abhängigkeit der wenigstens einen die Schwerpunktshöhe des Fahrzeuges beschreibenden Größe (hsix), eine Geschwindigkeitsgröße ermittelt wird, und

   daß wenigstens in Abhängigkeit dieser Geschwindigkeitsgröße ermittelt wird, ob für das Fahrzeug eine Kipptendenz um eine in Längsrichtung des Fahrzeuges orientierte Fahrzeugachse vorliegt,

   wobei bei Vorliegen einer Kipptendenz des Fahrzeuges um eine in Längsrichtung des Fahrzeuges orientierte Fahrzeugachse, zur Stabilisierung des Fahrzeuges, insbesondere zur Vermeidung des Umkippens des Fahrzeuges, wenigstens Bremseneingriffe an wenigstens einem Rad und/oder Motoreingriffe und/oder Eingriffe an Fahrwerksaktuatoren durchgeführt werden.

3. Verfahren nach Anspruch 1, **dadurch gekennzeichnet,**

   **daß** für wenigstens ein Rad der an diesem Rad vorherrschende Antriebs- und/oder Bremsschlupf (lambdaixj) ermittelt wird (301) und der Betrag dieses Antriebs- und/oder Bremsschlupfes (lambdaixj) mit einem entsprechenden Schwellenwert verglichen (S) wird (302), und

   **daß** die Ermittlung der wenigstens einen die Schwerpunktshöhe des Fahrzeuges beschreibenden Größe (hsix) in Abhängigkeit dieses Vergleiches durchgeführt wird (305), insbesondere wird, wenn für das wenigstens eine Rad der Betrag des an diesem Rad vorherrschenden Antriebs- und/oder Bremsschlupfes (lambdaixj) kleiner als der entsprechende Schwellenwert (S) ist, die Ermittlung der entsprechenden die Schwerpunktshöhe des Fahrzeuges beschreibenden Größe (hsix) wenigstens in Abhängigkeit von der für das wenigstens eine Rad im aktuellen Zeitschritt ermittelten zweiten Größe (rixj) durchgeführt, und/oder

   wird, wenn für das wenigstens eine Rad der Betrag des an diesem Rad vorherrschenden Antriebs- und/oder Bremsschlupfes (lambdaixj) größer als der entsprechende Schwellenwert (S) ist, die Ermittlung der entsprechenden die Schwerpunktshöhe des Fahrzeuges beschreibenden Größe (hsix) wenigstens in Abhängigkeit von der für das wenigstens eine Rad in einem vorigen Zeitschritt ermittelten zweiten Größe (rixj) durchgeführt.

4. Verfahren nach Anspruch 1, **dadurch gekennzeichnet,**

   **daß** als die zweite Größe eine von der auf das jeweilige Rad wirkenden Radlast abhängige Größe, insbesondere eine den Durchmesser oder den Radius des jeweiligen Rades beschreibende Größe, ermittelt wird.

5. Verfahren nach Anspruch 1, **dadurch gekennzeichnet,**

   **daß** die zweite Größe (rixj) wenigstens in Abhängigkeit der die Raddrehzahl des entsprechenden Rades beschreibenden ersten Größe (nixj), einer die Fahrzeuggeschwindigkeit beschreibenden Größe (vf), einer die Querdynamik des Fahrzeugs repräsentierenden Größe (omega) und einer die Geometrie des Fahrzeuges beschreibenden Größe (a) ermittelt wird, insbesondere wird hierfür als eine die Querdynamik des Fahrzeuges repräsentierende Größe eine die Gierrate des Fahrzeuges (omega) und/oder eine die Querbeschleunigung des Fahrzeuges beschreibende Größe (aq) ermittelt, und

   die die Fahrzeuggeschwindigkeit beschreibende Größe wenigstens in Abhängigkeit von den für die Räder ermittelten ersten Größen ermittelt.

**6.** Verfahren nach Anspruch 1, **dadurch gekennzeichnet,**

**daß** wenigstens in Abhängigkeit einer das Verhalten einer Radachse beschreibenden Größe (alphaix), die insbesondere einer den Neigungswinkel der Radachse gegenüber der Fahrbahn beschreibenden Größe entspricht, die entsprechende die Schwerpunktshöhe des Fahrzeuges beschreibende Größe (hsix) ermittelt wird,

insbesondere werden hierzu für die Räder einer Radachse jeweils die zweiten Größen (rixj) ermittelt und wenigstens in Abhängigkeit dieser Größen (rixj) und unter Berücksichtigung einer die Fahrzeuggeometrie repräsentierenden Größe (a), die das Verhalten der entsprechenden Radachse beschreibende Größe (alphaix) ermittelt.

**7.** Verfahren nach Anspruch 6, **dadurch gekennzeichnet**

**daß** eine die Querdynamik des Fahrzeuges repräsentierende Größe (aq) ermittelt wird, und

**daß** eine die auf die Radachse wirkende Last beschreibende Größe (mlix) ermittelt wird, und

**daß** bei der Ermittlung der entsprechenden die Schwerpunktshöhe des Fahrzeuges beschreibenden Größe (hsix), neben der das Verhalten der Radachse beschreibenden Größe (alphaix), zusätzlich die die Querdynamik des Fahrzeuges beschreibenden Größe (aq), die Größe, die die auf die Radachse wirkende Last beschreibt (mlix), eine die Fahrzeuggeometrie beschreibende Größe (a) und eine die Steifigkeit, insbesondere die resultierende vertikale Steifigkeit, der der Radachse zugeordneten Räder repräsentierende Größe (C), berücksichtigt wird.

**8.** Verfahren nach Anspruch 7, **dadurch gekennzeichnet,**

**daß** die die Schwerpunktshöhe des Fahrzeuges beschreibende Größe (hsix) gemäß der Beziehung

$$hsix = \frac{C \cdot a^2}{mlix \cdot aq} \cdot alphaix$$

ermittelt wird,

wobei C die resultierende vertikale Steifigkeit der der Radachse zugeordneten Räder repräsentiert, a der halben Spurweite der Radachse entspricht, alphaix dem Neigungswinkel der Radachse gegenüber der Fahrbahn entspricht, mlix der auf die Radachse wirkenden Last entspricht und aq der auf das Fahrzeug wirkenden Querbeschleunigung entspricht.

**9.** Vorrichtung zur Ermittlung wenigstens einer die Schwerpunktshöhe eines Fahrzeuges beschreibenden Größe (hsix),

die erste Mittel (201vlr, 201v11, 201h1r, 201h11) enthält, mit denen für wenigstens ein Rad eine die Raddrehzahl beschreibende erste Größe (nixj) ermittelt wird,

die zweite Mittel (205) enthält, mit denen für wenigstens ein Rad, in Abhängigkeit der mit den ersten Mitteln für das entsprechende Rad ermittelten ersten Größe (nixj), eine den Durchmesser oder den Radius des jeweiligen Rades beschreibende zweite Größe (rixj) ermittelt wird,

die dritte Mittel enthält (206), mit denen in Abhängigkeit von der mit den zweiten Mitteln (205) für wenigstens ein Rad ermittelten zweiten Größe (rixj), eine die Schwerpunktshöhe des Fahrzeuges beschreibende Größe (hsix) ermittelt wird.

**10.** Vorrichtung nach Anspruch 9, **dadurch gekennzeichnet,**

**daß** die Vorrichtung zur Ermittlung der wenigstens einen die Schwerpunktshöhe eines Fahrzeuges beschreibenden Größe (hsix), in einer Vorrichtung zur Stabilisierung des Fahrzeuges, insbesondere in einer Vorrichtung zur Umkippvermeidung des Fahrzeuges, eingesetzt wird,

wobei insbesondere vorgesehen ist,

**daß** mit vierten Mitteln, wenigstens in Abhängigkeit der mit den dritten Mitteln (206) ermittelten wenigstens einen Größe, eine Geschwindigkeitsgröße ermittelt wird, und

**daß** mit fünften Mitteln wenigstens in Abhängigkeit der mit den vierten Mitteln ermittelten Geschwindigkeitsgröße ermittelt wird, ob für das Fahrzeug eine Kipptendenz um eine in Längsrichtung des Fahrzeuges orientierte Fahrzeugachse vorliegt, und

**daß** bei Vorliegen einer Kipptendenz des Fahrzeuges um eine in Längsrichtung des Fahrzeuges orientierte Fahrzeugachse, zur Stabilisierung des Fahrzeuges, insbesondere zur Vermeidung des Umkippens des Fahrzeuges, wenigstens an wenigstens einem Rad die diesem Rad zugeordneten Aktuatoren zur Erzeugung einer Bremskraft und/oder ein Mittel zur Beeinflussung des Motormomentes und/oder Fahrwerkaktuatoren betätigt werden.

**Claims**

**1.** Method for determining at least one parameter which describes the height (hsix) of the centre of gravity of a vehicle,

in which a first parameter (nixj) which describes the rotational speed of a wheel is determined (301), for at least one wheel,

in which a second parameter (rixj) which describes the diameter or the radius of the respective wheel is determined (303) for at least one wheel as a function of the first parameter, and

in which a parameter which describes the height (hsix) of the centre of gravity of the vehicle is determined (305) as function of the second parameter (rixj).

2. Method according to Claim 1, **characterized in that** the method for determining at least one parameter (hsix) which describes the height of the centre of gravity of a vehicle is used within the scope of a method for stabilizing the vehicle, in particular within the scope of a method for preventing the vehicle from tipping over,
wherein in particular there is provision
that a velocity value is determined at least as a function of the at least one parameter (hsix) which describes the height of the centre of gravity of the vehicle and,
that at least as a function of this velocity value it is determined whether for the vehicle there is a tendency to tip about a vehicle axis oriented in the longitudinal direction of the vehicle,
wherein, when there is a tendency of the vehicle to tip about a vehicle axis oriented in the longitudinal direction of the vehicle, at least braking interventions at least at one wheel and/or engine interventions and/or interventions in chassis actuators are carried out in order to stabilize the vehicle, in particular in order to prevent the vehicle from tipping over.

3. Method according to Claim 1, **characterized in that**, for at least one wheel, the drive slip and/or brake slip (lambdaixj) present at this wheel is determined (301), and the absolute value of this drive slip and/or brake slip (lambdaixj) is (302) compared (S) with a corresponding threshold value, and
**in that** the determination of the at least one parameter (hsix) which describes the height of the centre of gravity of the vehicle is carried out (305) as a function of this comparison,
in particular if, for the at least one wheel, the absolute value of the drive slip and/or brake slip (lambdaixj) which is present at this wheel is smaller than the corresponding threshold value (S), the determination of the corresponding parameter (hsix) which describes the height of the centre of gravity of the vehicle is carried out at least as a function of the second parameter (rixj) which is determined for the at least one wheel in the current time step, and/or,
if, for the at least one wheel, the absolute value of the drive slip and/or brake slip (lambdaixj) which is present at this wheel is larger than the corresponding threshold value (S), the determination of the corresponding parameter (hsix) which describes the height of the centre of gravity of the vehicle is carried out at least as a function of the second parameter (rixj) which is determined for the at least one wheel in a previous time step.

4. Method according to Claim 1, **characterized in that** a parameter which is dependent on the wheel load acting on the respective wheel, in particular a parameter which describes the diameter or the radius of the respective wheel, is determined as the second parameter.

5. Method according to Claim 1, **characterized in that** the second parameter (rixj) is determined at least as a function of the parameter (nixj) which describes the rotational speed of the corresponding wheel, a parameter (vf) which describes the velocity of the vehicle, a parameter (omega) which represents the lateral dynamics of the vehicle and a parameter (a) which describes the geometry of the vehicle,
in particular a parameter which describes the yaw rate of the vehicle (omega) and/or a parameter (aq) which describes the lateral acceleration of the vehicle is determined for this purpose as a parameter which represents the lateral dynamics of the vehicle, and
the parameter which describes the velocity of the vehicle is determined at least as a function of the first parameters which are determined for the wheels.

6. Method according to Claim 1, **characterized in that** the corresponding parameter (hsix) which describes the height of the centre of gravity of the vehicle is determined at least as a function of a parameter (alphaix) which describes the behaviour of a wheel axle and which corresponds in particular to a parameter which describes the angle of inclination of the wheel axle with respect to the underlying surface,
in particular, for this purpose, in each case the second variables (rixj) are determined for the wheels of the wheel axle, and the parameter (alphaix) which describes the behaviour of the corresponding wheel axle is determined at least as a function of these parameters (rixj) and taking into account a parameter (a) which represents the geometry of the vehicle.

7. Method according to Claim 6, **characterized in that** a parameter (aq) which represents the lateral dynamics of the vehicle is determined, and
**in that** a parameter (mlix) which describes the load acting on the wheel axle is determined, and
**in that**, when the corresponding parameter (hsix) which describes the height of the centre of gravity of the vehicle is determined, in addition to the parameter (alphaix) which describes the behaviour of the wheel axle, also the parameter (aq) which describes the lateral dynamics of the vehicle, the parameter (mlix) which describes the load acting on the wheel axle, a parameter (a) which describes the vehicle geometry and a parameter (C) which represents the rigidity, in particular the resulting vertical rigidity, of the wheels assigned to the wheel axle are taken into account.

**8.** Method according to Claim 7, **characterized in that** the parameter (hsix) which describes the height of the centre of gravity of the vehicle is determined according to the relationship

$$hsix = \frac{C \cdot a^2}{mlix \cdot aq} \cdot alphaix,$$

where C represents the resulting vertical rigidity of the wheels which are assigned to the wheel axle, a corresponds to half the track of the wheel axle, alphaix corresponds to the angle of inclination of the wheel axle with respect to the underlying surface, mlix corresponds to the load acting on the wheel axle and aq corresponds to the lateral acceleration acting on the vehicle.

**9.** Device for determining at least one parameter (hsix) which describes the height of the centre of gravity of a vehicle, which contains first means (201v1r, 201v1l, 201hlr, 201h1l) with which the first parameter (nixj) which describes the rotational speed of a wheel is determined for at least one wheel, which contains second means (205) with which, for at least one wheel, a second parameter (rixj) which describes the diameter or the radius of the respective wheel is determined as a function of the first parameter(nixj) which has been determined for the corresponding wheel using the first means, which contains third means (206) with which a parameter (hsix) which describes the height of the centre of gravity of the vehicle is determined as a function of the second parameter (rixj) which has been determined for at least one wheel using the second means (205).

**10.** Device according to Claim 9, **characterized in that** the device for determining the at least one parameter (hsix) which describes the height of the centre of gravity of a vehicle is used in a device for stabilizing the vehicle, in particular in a device for preventing the vehicle from tipping over, wherein in particular there is provision that, using fourth means, a velocity value is determined at least as a function of the at least one parameter which has been determined using the third means (206), and that, using fifth means, it is determined, at least as a function of the velocity value which has been determined using the fourth means, whether for the vehicle there is a tendency to tip over about a vehicle axis which is oriented in the longitudinal direction of the vehicle, and that, when there is a tendency of the vehicle to tip over about a vehicle axis which is oriented in the longitudinal direction of the vehicle, at least at at least one wheel the actuators which are assigned to this wheel are activated in order to generate a braking force and/or a means for influencing the engine torque and/or chassis actuators are activated, for the purpose of stabilizing the vehicle, in particular in order to prevent the vehicle from tipping over.

**Revendications**

**1.** Procédé pour déterminer au moins une grandeur décrivant la hauteur du centre de gravité (hsix) d'un véhicule, selon lequel on détermine (301) d'abord pour au moins une roue, une première grandeur (nixj) décrivant la vitesse de rotation de roue, on détermine (303) une deuxième grandeur (rixj) décrivant le diamètre ou le rayon de la roue respective en fonction de la première grandeur, et on détermine (305) une grandeur décrivant la hauteur du centre de gravité (hsix) du véhicule en fonction de la deuxième grandeur (rixj).

**2.** Procédé selon la revendication 1, **caractérisé en ce que** le procédé pour déterminer au moins une grandeur (hsix) décrivant la hauteur du centre de gravité d'un véhicule est utilisé pour un procédé de stabilisation du véhicule, en particulier un procédé pour éviter un basculement du véhicule, selon lequel on prévoit notamment de

- déterminer une grandeur de vitesse au moins en fonction d'au moins une grandeur (hsix) décrivant la hauteur du centre de gravité du véhicule,
- déterminer au moins en fonction de cette grandeur de vitesse si on est en présence d'une tendance à basculer du véhicule autour d'un axe de véhicule orienté dans la direction longitudinale du véhicule, et
- en présence d'une tendance à basculer du véhicule autour d'un axe de véhicule orienté dans la direction longitudinale du véhicule, en particulier pour empêcher le basculement du véhicule, on effectue au moins des interventions au niveau du freinage sur au moins une roue et/ou des interventions au niveau du moteur et/ou des interventions au niveau des actionneurs du mécanisme de roulement.

**3.** Procédé selon la revendication 1, **caractérisé en ce que** pour au moins une roue on détermine (301) le patinage d'entraînement et/ou de freinage (lambdaixj) sur cette roue et on compare (302) le montant de ce patinage d'entraînement et/ou de freinage (lambdaixj) avec une valeur de seuil (S) correspondante, et en fonction de cette comparaison on effectue (305) la détermination d'au moins une grandeur (hsix) décrivant la hauteur du centre de gravité du véhicule,

en particulier on détermine la grandeur (hsix) décrivant la hauteur du centre de gravité du véhicule au moins en fonction de la deuxième grandeur (rixj) déterminée dans intervalle de temps actuel pour la roue, si pour cette roue le montant du patinage d'entraînement et/ou de freinage (lambdaixj) sur cette roue est inférieur à la valeur de seuil (S) correspondante, et/ou

on détermine la grandeur (hsix) décrivant la hauteur du centre de gravité du véhicule au moins en fonction de la deuxième grandeur (rixj) déterminée dans un intervalle de temps précédent pour la roue, si pour cette roue le montant de patinage d'entraînement et/ou de freinage (lambdaixj) sur cette roue est supérieur à la valeur de seuil (S) correspondante.

4. Procédé selon la revendication 1,
   **caractérisé en ce que**
   comme deuxième grandeur on détermine une grandeur qui est fonction d'une charge de roue agissant sur la roue respective, en particulier une grandeur décrivant le diamètre ou le rayon de la roue respective.

5. Procédé selon la revendication 1,
   **caractérisé en ce qu'**
   on détermine la deuxième grandeur (rixj) au moins en fonction de la première grandeur (nixj) décrivant la vitesse de rotation de la roue correspondante, d'une grandeur (vf) décrivant la vitesse du véhicule, d'une grandeur (omega) représentant la dynamique transversale du véhicule et d'une grandeur (a) décrivant la géométrie du véhicule, on détermine en particulier à cet effet comme une grandeur représentant la dynamique transversale du véhicule une grandeur (aq) décrivant le taux de lacet du véhicule (omega) et/ou l'accélération transversale du véhicule, et on détermine la grandeur décrivant la vitesse du véhicule au moins en fonction des premières grandeurs déterminées pour les roues.

6. Procédé selon la revendication 1,
   **caractérisé en ce qu'**
   on détermine la grandeur (hsix) décrivant la hauteur du centre de gravité du véhicule au moins en fonction d'une grandeur (alphaix) décrivant le comportement d'un essieu, qui correspond en particulier à une grandeur décrivant l'angle d'inclinaison de l'essieu par rapport à la chaussée, on détermine en particulier à cet effet respectivement les deuxièmes grandeurs (rixj) pour les roues d'un essieu et la grandeur (alphaix) décrivant le comportement de l'essieu correspondant, au moins en fonction de ces grandeurs (rixj) et en tenant compte d'une grandeur (a) représentant la géométrie du véhicule.

7. Procédé selon la revendication 6,
   **caractérisé en ce qu'**
   on détermine une grandeur (aq) représentant la dynamique transversale du véhicule, on détermine une grandeur (mlix) décrivant la charge agissant sur l'essieu, et
   lors de la détermination de la grandeur (hsix) correspondante décrivant la hauteur du centre de gravité du véhicule on tient compte, outre la grandeur (alphaix) décrivant le comportement de l'essieu, en plus de la grandeur (aq) décrivant la dynamique transversale du véhicule, de la grandeur (mlix) qui décrit la charge agissant sur l'essieu, d'une grandeur (a) décrivant la géométrie du véhicule, et d'une grandeur (C) représentant la rigidité, en particulier la rigidité verticale résultante, des roues associées à l'essieu.

8. Procédé selon la revendication 7,
   **caractérisé en ce que**
   la grandeur (hsix) décrivant la hauteur du centre de gravité du véhicule est déterminée selon la relation

$$hsix = \frac{C \cdot a^2}{mlix \cdot aq} \cdot alphaix$$

dans laquelle C représente la rigidité verticale résultante des roues associées à l'essieu, a correspond à la moitié de l'écartement des roues, alphaix correspond à l'angle d'inclinaison de l'essieu par rapport à la chaussée, mlix correspond à la charge agissant sur l'essieu et aq correspond à l'accélération transversale agissant sur le véhicule.

9. Dispositif pour déterminer au moins une grandeur (hsix) décrivant la hauteur du centre de gravité d'un véhicule, qui comprend :

   - des premiers moyens (201v1r, 201v1l, 201h1r, 201h1l) avec lesquels on détermine une première grandeur (nixj) décrivant la vitesse de rotation pour au moins une roue,
   - des deuxièmes moyens (205) avec lesquels on détermine une deuxième grandeur (rixj) décrivant le diamètre ou le rayon de la roue respective pour au moins une roue en fonction de la première grandeur (nixj) déterminée avec les premiers moyens pour la roue correspondante, et
   - des troisièmes moyens (206) avec lesquels on détermine une grandeur (hsix) décrivant la hauteur du centre de gravité du véhicule en fonction de la deuxième grandeur (rixj) déterminée par les deuxièmes moyens (205) pour au moins une roue.

10. Dispositif selon la revendication 9,
**caractérisé en ce que**
le dispositif pour déterminer au moins une grandeur (hsix) décrivant la hauteur du centre de gravité d'un véhicule est mis en oeuvre dans un dispositif de stabilisation du véhicule, en particulier dans un dispositif pour empêcher le basculement du véhicule,
dans lequel on prévoit en particulier
des quatrièmes moyens qui, au moins en fonction d'au moins une grandeur déterminée par les troisièmes moyens (206), déterminent une grandeur de vitesse, et
des cinquièmes moyens qui, au moins en fonction de la grandeur de vitesse déterminée par les quatrièmes moyens, déterminent la présence d'une tendance à basculer du véhicule autour d'un axe de véhicule orienté dans la direction longitudinale du véhicule, et
qu'en présence d'une tendance à basculer du véhicule autour d'un axe de véhicule orientée dans la direction longitudinale du véhicule, pour stabiliser le véhicule, en particulier pour éviter un basculement du véhicule, au moins sur au moins une roue les actionneurs associés à cette roue sont activés pour générer une force de freinage et/ou un moyen pour influencer le couple moteur et/ ou des actionneurs de roulage.

## Fig. 1a

102v1r  102v2r  102h2r  102h1r

103v1  103v2  103h2  103h1

101

104

102v1l  102v2l  102h2l  102h1l

## Fig. 1b

107vrz  105  107hrz  106  107h2ra  107h1ra

108vz  108hz  108h2a  108h1a

109

107vlz  107hlz  107h2la  107h1la

# Fig. 2

EP 0 918 003 B1

# Fig. 3

```
        ┌─────────────────────────┐
        │ nixj, omega, aq, vf      │ ⟋301
        │ lambdaixj,mlix           │
        │ einlesen                 │
        └─────────────────────────┘
                    │
                    ▼
              ╱─────────────╲
             ╱ |lambdaixj| < S ╲        N
            ╱        ?          ╲──────────────┐
            ╲                   ╱              │
             ╲─────────────────╱ ⟍302         │
                    │ J                        │
                    │                    ┌──────────────────────┐ ⟋306
                    │                    │ alphaix eines         │
                    │                    │ vorigen Zeitschrittes │
                    │                    │ bereitstellen         │
                    ▼                    └──────────────────────┘
        ┌─────────────────────┐                 │
        │ rixj ermitteln      │ ⟍303            │
        └─────────────────────┘                 │
                    │                            │
                    ▼                            │
        ┌─────────────────────┐ ⟋304            │
        │ alphaix ermitteln   │                 │
        └─────────────────────┘◄────────────────┘
                    │
                    ▼
        ┌─────────────────────┐
        │ hsix ermitteln      │ ⟋305
        └─────────────────────┘
                    ┊
                    ▼
        ┌─────────────────────┐ ⟋307
        │ Umkipperkennung     │
        └─────────────────────┘
```

# Fig. 4